# EUROPÄISCHE PATENTSCHRIFT

(11) **EP 1 932 649 B1**
(45) Veröffentlichungstag und Bekanntmachung des Hinweises auf die Patenterteilung: **26.05.2010**
(21) Anmeldenummer: 07119139.9
(22) Anmeldetag: 24.10.2007
(51) Int. Cl.: B29C 44/34, B01F 5/04, B29B 7/74

(54) **Poröses Dosierelement mit Beschichtung**
Porous metering element with coating
Elément de dosage poreux avec revêtement

(30) Priorität: 14.12.2006 EP 06126095
(43) Veröffentlichungstag der Anmeldung: 18.06.2008
(73) Patentinhaber: Sulzer Chemtech AG, 8404 Winterthur (CH)
(72) Erfinder: Habibi-Naini, Sasan, 8486, Rikon (CH)
(74) Vertreter: Sulzer Management AG

(56) Entgegenhaltungen:
- EP-A- 1 717 008
- DE-B3- 10 249 314
- US-A- 3 972 970

## Beschreibung

Die Erfindung betrifft eine Dosiervorrichtung, umfassend ein Dosierelement zur Dosierung von Fluiden, insbesondere Gasen zu einer fluiden, viskosen oder zähflüssigen Masse, gemäß dem Oberbegriff des Anspruchs 1.

Aus dem Stand der Technik ist eine poröse Hülse bekannt, die zur Dosierung von Treibmittel in eine Polymerschmelze verwendbar ist. In einer derartigen Dosiervorrichtung, wie sie beispielsweise in der US-A-3 972 970 oder DE 101 50 329 A1 gezeigt wird, kann der Eintrag eines physikalischen, insbesondere gasförmigen, eventuell im überkritischen Zustand befindlichen, Treibmittels über einen aus einem porösen Werkstoff bestehenden Zylinder erfolgen, der zwischen Plastifizierzylinder und Verschlussdüse der Spritzgiessmaschine montiert ist. Im Inneren des porösen Zylinders ist ein statisches Mischelement angeordnet, welches über in den Schmelzekanal hineinreichende Stege verfügt, die für eine Umlagerung der Schmelze und eine Durchmischung des zunächst noch inhomogenen Polymer/Treibmittelsystems während der Einspritzphase sorgen.

Der Einsatz des in der DE 101 50 329 A1 gezeigten porösen Zylinders, der mittels der Verschlussdüse in einer Bohrung der Druckkammer gehalten wird, ist in Hochdruckverfahren problematisch, da der poröse Zylinder keine ausreichende Druckbeständigkeit aufweist. Daher wurde , vorgeschlagen, die Dosiervorrichtung nicht als poröse Hülse auszuführen, sondern in eine Hülse, die insbesondere als hochfester Werkstoff ausgebildet ist, Dosierelemente aus porösem Material einzusetzen.

Eine Dosiervorrichtung eignet sich zur Verwendung in Hochdruckverfahren, da einerseits die Verschwächung der Hülse auf die Oberfläche der Dosierelemente beschränkt ist. Die Dosierelemente aus porösem Material weisen naturgemäss nur eine begrenzte Festigkeit auf. Überschreitet jedoch der Oberflächenanteil der Dosierelemente nicht einen Maximalwert von 25% insbesondere 20%, bei Mischaufgaben unter hohen Drücken in besonders bevorzugter Weise 15%, führt die Verschwächung, bedingt durch die Kerbwirkung der Dosierelemente nicht zur Ausbildung von Haarrissen oder vergleichbaren Versagensphänomenen. Je geringer der Oberflächenanteil der Dosierelemente an der Oberfläche der Hülse ist, desto höher kann der Betriebsdruck, bzw. die maximale Druckdifferenz zwischen der inneren Oberfläche der Hülse und deren äusseren Oberfläche gewählt werden.

Allerdings hat sich gezeigt, dass bei einem mittleren Porendurchmesser von ca. 10 µm und Betriebsdrücken um die 1000 bar die fluide, viskose oder zähflüssige Masse trotz des Gegendrucks des über die Poren des Dosierelements einzubringenden Additivs in das Innere der Poren der Hülse eindringen kann.

Die sich im Inneren der Poren ablagernde fluide, viskose, zähflüssige oder pastöse Masse hat die Neigung, die Poren sukzessive zu verstopfen, wodurch die Funktion des Dosierelements nur noch eingeschränkt aufrechterhalten wird und letztendlich das Dosierelement unbrauchbar wird. Insbesondere wenn ein Wechsel der Zusammensetzung der auf einer Oberfläche des Dosierelements strömenden fluiden, viskosen oder zähflüssigen Masse erfolgt, können sich derartige Ablagerungen als störend auswirken. Die Ablagerungen können nämlich bei Beaufschlagung des Dosierelements mit einem unter Druck stehenden Additiv unkontrollierbar wieder in die fluide, viskose oder zähflüssige Masse gelangen, wodurch es zur Kontamination derselben kommt.

Ein weiterer Nachteil ergibt sich bei Verarbeitung von Massen, deren Verweilzeit in der Dosiervorrichtung eine bestimmte Dauer nicht überschreiten darf. Verbleiben Reste derartiger Massen in den Poren, kann es zu unerwünschten Reaktionen in der Masse kommen, wodurch nachströmende Masse durch die verlängerte Verweilzeit der Masse im Randbereich kontaminiert wird.

Aufgrund der sich abzeichnenden Nachteile der Verwendung eines porösen Dosierelements stellt sich die Aufgabe, ein poröses Dosierelement mit vergleichbarer Porengrösse einzusetzen, bei welchem verhindert werden kann, dass Masse in das Dosierelement eindringt und dort verbleibt.

Die Lösung der Aufgabe erfolgt mit einer Dosiervorrichtung, umfassend ein Dosierelement aus einem fluid- oder gasdurchlässigen Material, und ein Grundmaterial, mit einer ersten Oberfläche, die an einen Zuleitungskanal für ein gasförmiges oder dünnflüssiges Medium angrenzt und einer zweiten Oberfläche, die an einen von einer zähflüssigen oder pastösen Masse durchströmten Kanalabschnitt angrenzt sowie einer Mantelfläche, welche zumindest teilweise eine form- oder kraftschlüssige Verbindung mit einer dosierelementaufnehmenden Ausnehmung im Grundmaterial eingeht, sodass das Dosierelement im Grundmaterial befestigbar ist und ein fluidleitendes Element ausbildet. Das fluid- oder gasdurchlässige Material weist Poren ausbildende Hohlräume auf, wobei die Poren ausbildenden Hohlräume derart miteinander verbunden sind, dass sie von der ersten Oberfläche zu der zweiten Oberfläche von einem gasförmigen oder dünnflüssigen Medium durchströmbar sind. Die zweite Oberfläche umfasst ein Mittel, durch welches der relevante Porendurchmesser gemessen parallel zur Hauptströmungsrichtung der zähflüssigen oder pastösen Masse derart verringerbar ist, dass ein Eintritt von zähflüssiger oder pastöser Masse in das Innere des Dosierelements vermeidbar ist.

Der Porendurchmesser des Dosierelements an der zweiten Oberfläche beträgt maximal 10 µm, bevorzugt 2-3 µm, insbesondere 0.5 µm.

Das Grundmaterial ist ein Stahl, insbesondere ein Stahl hoher Festigkeit und Kerbschlagzähigkeit, da der Stahl einer Druckwechselbeanspruchung stand halten muss, wenn eine zähflüssige, viskose oder pastöse Masse in der Dosiervorrichtung mit einem Additiv beladen werden soll.

Das fluid- oder gasdurchlässige Material umfasst ein keramisches Material oder ein Metall, das gegebenenfalls als eine Legierung ausgebildet ist. Ein Dosierelement kann durch ein Sinterverfahren hergestellt worden sein, bei welchem das aus Partikeln bestehende keramische oder metallische Material unter Zufuhr von Wärmeenergie an der Oberfläche anschmilzt und derart die Oberflächen der Partikel miteinander verbunden werden. Die Wahl des Materials richtet sich grundsätzlich nach der chemischen Reaktionsfähigkeit des Additivs und des Mediums, sowie nach der zu erwartenden Betriebstemperatur. Die Druckbeständigkeit der Dosiervorrichtung kann nicht durch das Dosierelement, sondern nur durch das Grundmaterial gewährleistet werden.

Das Mittel umfasst insbesondere eine Beschichtung, für welche bevorzugt ein metallisches und/oder keramisches Beschichtungsmaterial verwendet wird. Für die Beschichtung gelten grundsätzlich dieselben Auswahlkriterien, wie für das Material des Dosierelements, mit der zusätzlichen Einschränkung, dass eine Haftfähigkeit der Beschichtung auf dem Grundmaterial gewährleistet sein muss.

Die Beschichtung ist mittels eines PVD-Verfahrens oder gleichwertigen Verfahrens wie beispielsweise eines thermischen Spritzverfahrens, auf das fluid- oder gasdurchlässige Material aufbringbar. Die Verwendung des PVD-Verfahrens hat insbesondere den Vorteil, dass ausschliesslich der oberflächennahe Bereich des Dosierelements beschichtet wird. Somit wird gewährleistet, dass nur die maximalen Porendurchmesser unmittelbar an der Oberfläche des Dosierelements, nicht aber im Kernbereich des Dosierelements verringert werden. Somit wird vermieden, dass es durch die Beschichtung zum Verschluss einiger Poren kommt, sodass die durch die Verringerung des Porendurchmessers im oberflächennahen Bereich des Dosierelements zu erwartende Erhöhung des Druckverlusts in den Grenzen hält, die durch die Drosselwirkung der Querschnittsverringerung im oberflächennahen Bereich des Dosierelements vorgegeben sind.

Insbesondere wird eine aus mehreren Lagen bestehende Schicht verwendet, wobei bevorzugt eine CrN oder eine TiN-Schicht zum Einsatz kommt. Die verschiedenen Lagen umfassen eine Grundierung, wodurch gewährleistet wird, dass die Schicht auf dem Untergrund des Dosierelements dauerhaft haftet. Auf diese Grundierung wird zumindest eine weitere Lage einer Deckschicht aufgetragen, wodurch insbesondere die Verschleissfestigkeit erhöht werden kann.

Durch das Mittel ist der durchströmte Querschnitt um mindestens 10% vorzugsweise um mindestens 18%, insbesondere um mindestens 36% verringerbar.

Eine Dosiervorrichtung nach einem der vorhergehenden Ausführungsbeispiele kann zum Eintrag eines Additivs in eine Schmelze, insbesondere eines Treibmittels in eine Polymerschmelze verwendet werden.
- Fig. 1: zeigt einen Längsschnitt durch eine Dosiervorrichtung nach einem ersten Ausführungsbeispiel
- Fig. 2: zeigt einen Radialschnitt durch eine Dosiervorrichtung gemäss Fig. 1
- Fig. 3: zeigt einen Längsschnitt durch eine Dosiervorrichtung nach einem zweiten Ausführungsbeispiel
- Fig. 4: zeigt einen Radialschnitt durch eine Dosiervorrichtung gemäss Fig. 3
- Fig. 5: zeigt einen Ausschnitt aus einem Dosierelement
- Fig. 6: zeigt einen Ausschnitt aus einem Dosierelement nach einem zweiten Ausführungsbeispiel

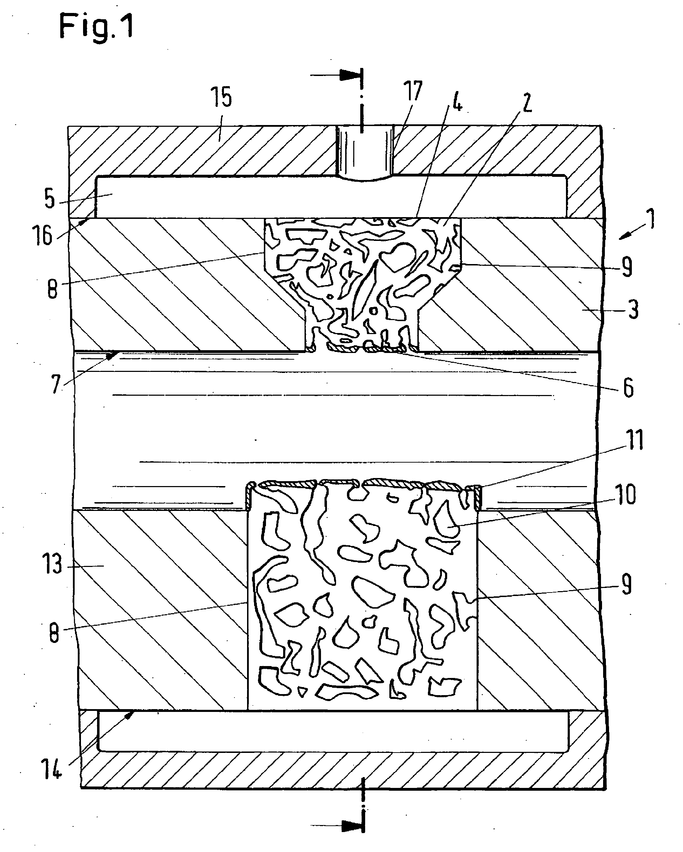

In Fig. 1 ist eine Dosiervorrichtung 1 dargestellt, die ein Dosierelement 2 aus einem fluid- oder gasdurchlässigen Material umfasst. Das Dosierelement 2 ist in ein Grundmaterial 3 eingebettet, und umfasst eine erste Oberfläche 4, die an einen Zuleitungskanal 5 für ein gasförmiges oder dünnflüssiges Medium angrenzt und eine zweite Oberfläche 6, die an einen von einer zähflüssigen oder pastösen Masse durchströmten Kanalabschnitt 7 angrenzt. Das Dosierelement 2 und das Grundmaterial 3 bilden somit gemeinsam ein fluidleitendes Element 13, mit Dosiermittel aus. Die erste Oberfläche 4 und zweite Oberfläche 6 des Dosierelements dieses fluidleitenden Elements 13 liegen einander in diesem Ausführungsbeispiel im wesentlichen gegenüber. In diesem Ausführungsbeispiel ist das fluidleitende Element 13 insbesondere als Hohlzylinder ausgestaltet, in welchem als Dosiermittel eben eine Mehrzahl der vorgenannten Dosierelemente eingebaut sind. Ein Additiv durchströmt in diesem Ausführungsbeispiel das Dosierelement 2 ausgehend von dessen ersten Oberfläche 4 zur zweiten Oberfläche 6. Das Dosierelement 2 ist mit einer Mantelfläche 8 ausgestattet, die sich zwischen der ersten Oberfläche 4 und der zweiten Oberfläche 6 erstreckt und zumindest teilweise an eine Ausnehmung 9 des Grundmaterials angrenzt. Die Mantelfläche 8, geht zumindest teilweise eine form- kraft- oder stoffschlüssige Verbindung mit der dosierelementaufnehmenden Ausnehmung 9 im Grundmaterial 3 ein, sodass das Dosierelement 2 im Grundmaterial 3 befestigbar ist, wodurch das fluidleitende Element 13 mit Dosiermittel ausgebildet wird. Ein derartiges fluidleitendes Element kann somit mit den Dosierelementen komplett vorgefertigt werden und wird erst beim Zusammenbau förmschlüssig, kraftschlüssig oder stoffschlüssig beispielsweise im Anschluss an einen Extruder oder stromaufwärts einer Spritzgiessmaschine eingebaut. Das fluid-und/oder gasdurchlässige Material des Dosierelements 2 weist Poren ausbildende Hohlräume 10 auf, wobei die Poren ausbildenden Hohlräume 10 derart miteinander verbunden sind, dass sie von der ersten Oberfläche 4 zu der zweiten Oberfläche 6 von einem gasförmigen oder dünnflüssigem Medium durchströmbar sind. Die zweite Oberfläche 6 umfasst eine Beschichtung 11, durch welche der relevante Porendurchmesser gemessen parallel zur Hauptströmungsrichtung der zähflüssigen oder pastösen Masse derart verringerbar ist, dass ein Eintritt von zähflüssiger oder pastöser Masse in das Innere des Dosierelements 2 vermeidbar ist.

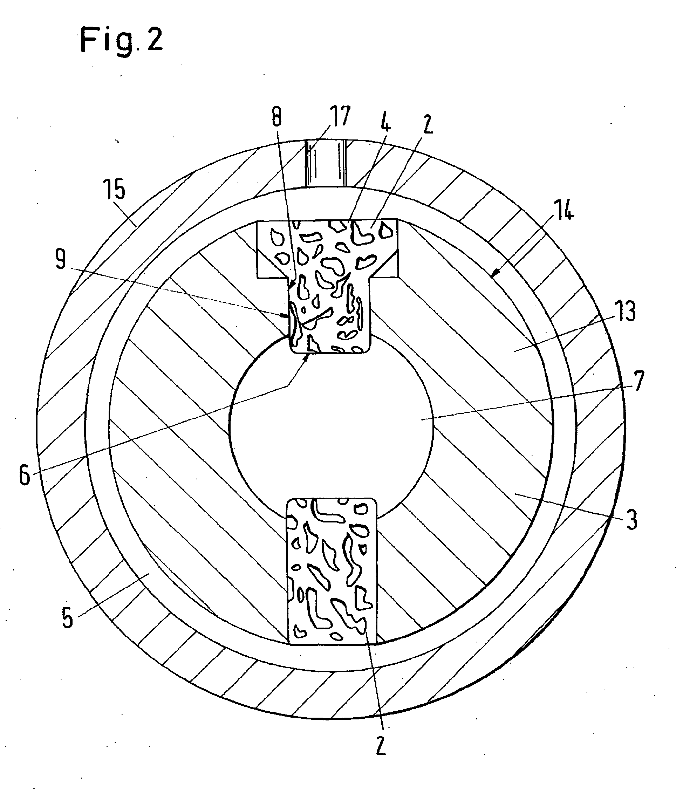

Fig. 2 zeigt einen Radialschnitt durch eine Dosiervorrichtung nach einem ersten Ausführungsbeispiel. Die Dosiervorrichtung 1 umfasst einen Kanalabschnitt 7, in welchem eine fluide, zähflüssige, viskose oder pastöse Masse strömt. Der Kanalabschnitt wird von einem rohrförmigen fluidleitenden Element 13 begrenzt, das ein Grundmaterial 3, sowie zumindest ein Dosierelement 2 umfasst. In der Darstellung der Fig. 2 sind zwei gegenüberliegend angeordnete Dosierelemente 2 dargestellt. Eines der Dosierelemente ist im wesentlichen zylindrisch geformt, das zweite Dosierelement weist zylindrische und einen konischen Abschnitt auf. Das Dosierelement 2 ist in das Grundmaterial 3 eingebettet, und umfasst eine erste Oberfläche 4, die an einen Zuleitungskanal 5 für ein gasförmiges oder dünnflüssiges Medium angrenzt und eine zweite Oberfläche 6, die an den von einer zähflüssigen oder pastösen Masse durchströmten Kanalabschnitt 7 angrenzt. Erste Oberfläche 4 und zweite Oberfläche 6 liegen einander in diesem Ausführungsbeispiel im wesentlichen gegenüber. Das Additiv durchströmt in diesem Ausführungsbeispiel das Dosierelement ausgehend von der ersten Oberfläche 4 zur zweiten Oberfläche 6. Das Dosierelement 2 hat eine Mantelfläche 8, die sich zwischen der ersten Oberfläche 4 und der zweiten Oberfläche 6 erstreckt und zumindest teilweise an eine Ausnehmung 9 des Grundmaterials angrenzt. Die Mantelfläche 8, ist zumindest teilweise mittels einer form- kraft- oder stoffschlüssigen Verbindung mit der dosierelementaufnehmenden Ausnehmung 9 im Grundmaterial 3 verbindbar, sodass das Dosierelement 2 im Grundmaterial 3 befestigbar ist. Der Zuleitungskanal 5 ist dabei als Ausnehmung auf der im wesentlichen ersten Oberfläche 4 benachbarten äusseren Oberfläche 14 des Grundmaterials anbringbar. Alternativ oder in Kombination dazu kann, wie in Fig. 1 dargestellt wurde, ein Mantelelement 15 vorgesehen sein, an dessen innerer Oberfläche 16 eine Ausnehmung vorsehbar ist. Das Additiv strömt somit in einem Zuleitungskanal 5, der als Ringkanal ausgeführt ist, wie in Fig. 2 dargestellt ist, und von dem Zuleitungskanal 5 über die erste Oberfläche 4 durch das Dosierelement und tritt an der zweiten Oberfläche 6 in den Kanalabschnitt 7 ein. In Fig. 2 ist auch eine Anschlussbohrung 17 gezeigt, welche für einen Anschluss einer Additivzuleitung vorgesehen ist.

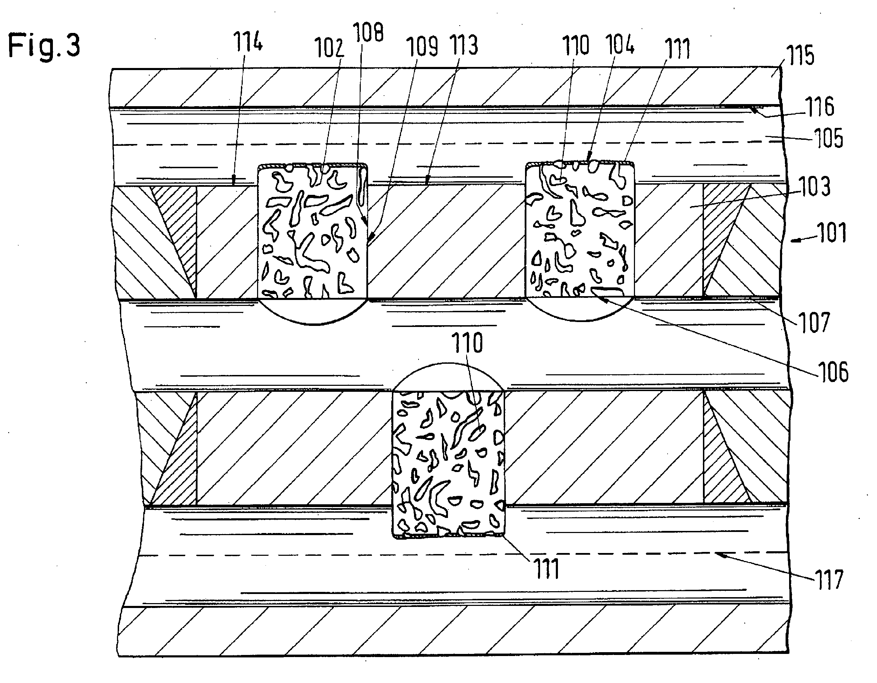

Fig. 3 zeigt einen Längsschnitt durch eine Dosiervorrichtung 101 nach einem zweiten Ausführungsbeispiel, gemäss dessen die fluide, fliessfähige, viskose oder pastöse Masse in einem Ringkanal 105 strömt. Der Ringkanal 105 ist von einem Mantelelement 115 umgeben, dessen innere Oberfläche 116 die äussere Grenzfläche für die Strömung darstellt. Bedingt durch die hohe Viskosität der Masse, liegt eine im wesentlichen laminare Strömung im Ringkanal 105 vor, sodass die Strömungsgeschwindigkeit von dieser inneren Oberfläche zur Mittelfläche der Ringkanalströmung 117 kontinuierlich zunimmt, solange nicht durch Einbauten ein abweichender Strömungsverlauf mit dementsprechend abweichenden Geschwindigkeitsverteilungen erzwungen wird. Die innere Grenzfläche der Strömung wird im wesentlichen durch die äussere Oberfläche 114 des Grundmaterials 103 gebildet. Die Mittelfläche 117 des Ringkanals 105 ist im Fall einer zylindrischen äusseren Oberfläche des Grundmaterials 114 ein Zylinder mit einem Radius, welcher dem halben Radius der inneren Oberfläche 116 des Mantelelements 115 plus dem halben Radius der äusseren Oberfläche 114 des Grundmaterials entspricht. Ein Additiv wird den Dosierelementen über einen Kanalabschnitt 107 zugeführt. Das fluidleitende Element 113 kann insbesondere als rohrförmiger Hohlraum ausgebildet sein, um welchen das Grundmaterial 103 sowie die darin aufgenommenen Dosierelemente 102 angeordnet sind. Für die Dosierelemente 102 sind im Grundmaterial 103 Ausnehmungen 109 vorgesehen, in welchen das Dosierelement formschlüssig, kraftschlüssig oder stoffschlüssig aufgenommen wird. In Fig. 3 ist insbesondere eine kraftschlüssige Aufnahme des Dosierelements 102 in der zugehörigen Ausnehmung 109 gezeigt. Ein Beispiel für die Erzeugung einer derartigen kraftschlüssigen Verbindung ist die Einpassung des (kalten) Dosierelements in das erwärmte Grundmaterial, sodass bei Abkühlung des Grundmaterials und dessen Kontraktion eine Presspassung entsteht. Als stoffschlüssige Verbindungen kommen insbesondere Schweissverbindungen, Lötverbindungen oder Klebeverbindungen zum Einsatz. Ein Beispiel für eine formschlüssige Verbindung ist der Einbau eines zumindest teilweise konischen Dosierelements 102 in eine entsprechende konische Gegenform der Ausnehmung 109. Bei Verwendung von konischen Dosierelementen ist es vorteilhaft, dass die Spitze des Konus in Richtung der ersten Oberfläche 104 des Dosierelements zeigt, sodass das Dosierelement durch den Druck des Additivs mit einer zusätzlichen Kraft in seiner Ausnehmung 109 gehalten wird. Kommt ein derartiges Dosierelement zum Einsatz, ergibt sich durch den sich in Richtung der ersten Oberfläche 104 verringernden Querschnitt eine Düsenwirkung, sodass die Strömungsgeschwindigkeit des durch das Dosierelement strömenden Additivs erhöht wird.

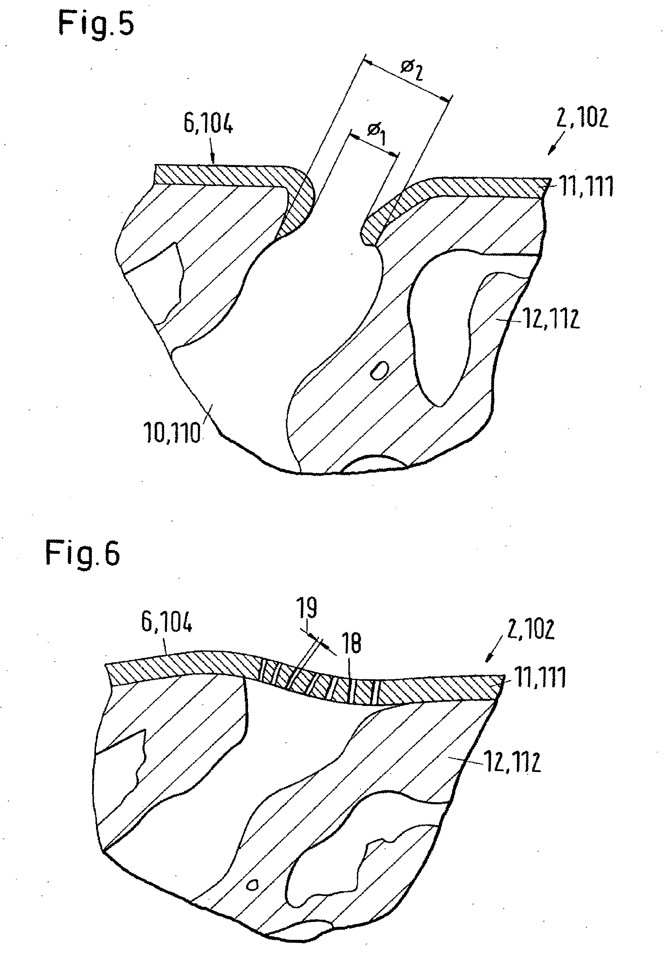

Das Additiv tritt vom additivleitenden Element 113 über die zweite Oberfläche 106 in das Dosierelement 102 ein. Das Additiv strömt sodann durch die Poren oder Hohlräume 110 des Dosierelements 102 und tritt durch die erste Oberfläche 104 in den Ringkanal 105 ein. Das Dosierelement kann in den Innenraum des Ringkanals hineinragen, sodass durch das Dosierelement eine Umlagerung der strömenden Masse erfolgt und somit eine bessere Durchmischung von Masse und Additiv vorgenommen werden kann. Um zu vermeiden, dass fluide, viskose, zähflüssige oder pastöse Masse in Poren oder Hohlräume insbesondere in einen Bereich nahe der ersten Oberfläche 104 gelangt, können Mittel eingesetzt werden, um den Durchmesser der Poren oder Hohlräume in diesem Bereich zu verringern. Insbesondere ist zumindest ein Teil der ersten Oberfläche 104 mit einem Beschichtungsmaterial 111 beschichtbar. Die Verwendung eines Beschichtungsmaterials wird in Zusammenhang mit Fig. 5 erläutert.

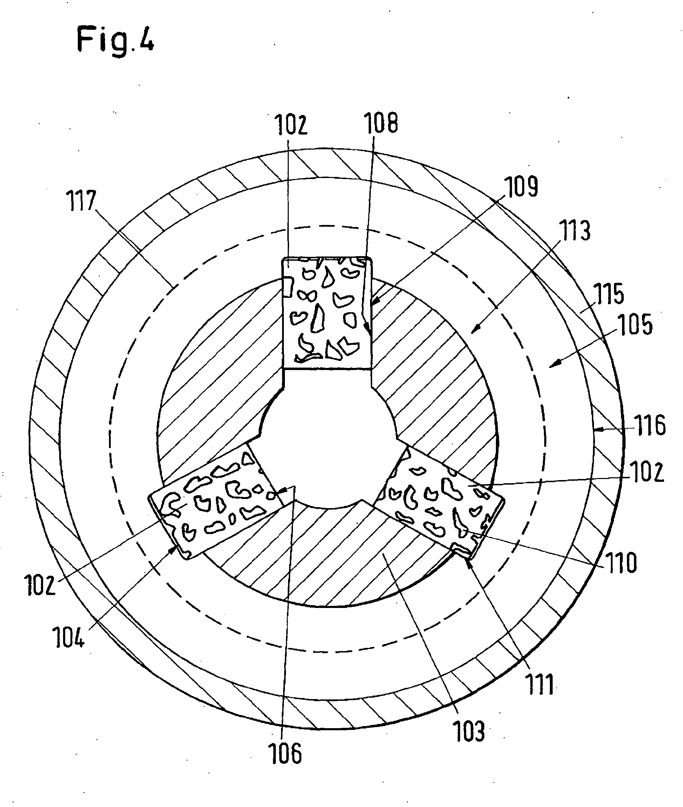

Fig. 4 zeigt einen Radialschnitt durch eine Dosiervorrichtung nach dem Ausführungsbeispiel gemäss Fig. 3. Die Dosiervorrichtung 101 umfasst einen Ringkanal 105, in welchem eine fluide, zähflüssige, viskose oder pastöse Masse strömt. Der Ringkanal 105 wird einerseits von einem fluidleitenden Mantelelement 115 begrenzt, das insbesondere rohrförmig, besonders bevorzugt als Rohr mit kreisförmigem Querschnitt ausgestaltet ist. Die innere Begrenzung des Ringkanals erfolgt durch ein Grundmaterial 103, welches zumindest ein Dosierelement 102 umfasst. In der Darstellung der Fig. 4 sind drei derartige Dosierelemente 102 dargestellt. Die Dosierelemente sind im wesentlichen als zylindrische Körper geformt, wobei jedes der Dosierelemente alternativ dazu konisch, oder mit zylindrischen und konischen Abschnitten ausgestaltet sein kann. Das Dosierelement 102 ist in das Grundmaterial 103 eingebettet, und umfasst eine erste Oberfläche 104, die an den von einer zähflüssigen, viskosen oder pastösen Masse durchströmten Ringkanal 105 angrenzt und eine zweite Oberfläche 106, die an einen Kanalabschnitt 107 für ein gasförmiges oder dünnflüssiges Medium, das im Text auch als Additiv bezeichnet wird, angrenzt. Erste Oberfläche 104 und zweite Oberfläche 106 liegen einander in diesem Ausführungsbeispiel im wesentlichen gegenüber. Das Additiv durchströmt in diesem Ausführungsbeispiel das Dosierelement ausgehend von der zweiten Oberfläche 106 zur ersten Oberfläche 104. Das Dosierelement 102 hat eine Mantelfläche 108, die sich zwischen der ersten Oberfläche 104 und der zweiten Oberfläche 106 erstreckt und zumindest teilweise an eine Ausnehmung 109 des Grundmaterials angrenzt. Die Mantelfläche 108, ist zumindest teilweise mittels einer form- kraft- oder stoffschlüssigen Verbindung mit der dosierelementaufnehmenden Ausnehmung 109 im Grundmaterial 103 verbindbar, sodass das Dosierelement 102 im Grundmaterial 103 befestigbar ist. Das Additiv strömt somit in einem Kanalabschnitt 107, und von dem Kanalabschnitt 107 über die zweite Oberfläche 106 durch die Poren oder Hohlräume 110 des Dosierelements und tritt an der ersten Oberfläche 104 in den Ringkanal 105 ein.

Die Anordnung der Dosierelemente ist nicht auf die in Fig.1 bzw. Fig. 2 oder auf die in Fig. 3 bzw. Fig. 4 dargestellten Ausführungsbeispiele beschränkt. Insbesondere können Dosierelemente im Mantelelement 115 angeordnet sein, wobei dieses Mantelelement dann von einem weiteren, äusseren Mantelelement ummantelt wird, welches in den Fig. nicht dargestellt ist. Im Mantelelement 115 oder dem äusseren Mantelelement ist eine Ausnehmung für einen Zuleitungskanal ausgebildet, der beispielsweise wie der Zuleitungskanal 5 in Fig. 1 ausgebildet sein kann.

Fig. 5 zeigt einen Ausschnitt aus der Oberfläche des porösen Dosierelements (2,102), der einen Teil der ersten Oberfläche 104 oder der zweiten Oberfläche 6 umfasst. Das Dosierelement (2,102) umfasst einen aus einem Feststoff bestehenden Körper (12,112) wobei dieser Körper aus einem additivbeständigen Werkstoff besteht.

Die Bildung der Hohlräume oder Poren (10,110) im Körper (12,112) des Dosierelements erfolgt entweder in einem Sinterverfahren oder in einem abtragenden Verfahren, wie beispielsweise einem Ätzverfahren. Alternativ dazu kann der Körper ein Gefüge aufweisen, das eine Mischung aus verschiedenartigen Materialien aufweist. Die Hohlräume werden dann durch Auswaschen eines der Materialien erhalten, das in einem Lösungsmittel lösbar ist. Zurück verbleibt dann ein Gerüst aus einem oder mehreren Komponenten des Gefüges, die in dem Lösungsmittel nicht lösbar sind.

Im Sinterverfahren liegt das Rohmaterial als Pulver vor. Die Partikel des Pulvers werden in den Randzonen angeschmolzen, wodurch sich jeweils benachbarte Partikel miteinander verbinden. Die Zwischenräume, die aufgrund der räumlichen Anordnung der Partikel bestanden haben, bleiben zumindest teilweise erhalten, sodass sich zwischen dem sich aus den Partikeln bildenden Agglomerat Hohlräume oder Poren ausbilden, die nach Abkühlung des Agglomerats verbleiben. Ein Vorteil des Sinterverfahrens ist die Möglichkeit, das pulverförmige Rohmaterial in beliebig gestalteten Formen zu verarbeiten, sodass die Abmessungen des Dosierelements beliebig wählbar sind. Die einzige Einschränkung besteht darin, die Abmessungen derart zu wählen, dass der Wärmeeintrag über das gesamte Volumen des Dosierelements im wesentlichen gleichmässig erfolgt, sodass der angeschmolzene Bereich der Partikel über das gesamte Volumen des Dosierelements im wesentlichen gleich ist.

Soll hingegen ein Ätz- oder Auswaschverfahren zur Herstellung eines porösen Dosierelements zum Einsatz kommen, erfolgt die Formgebung des Dosierelements in einem der Herstellung der Hohlräume oder Poren vorgeschalteten Verfahrensschritt.

Bei einigen gasförmigen oder leichtflüchtigen Additiven hat sich gezeigt, dass die Hohlräume oder Poren in einem der ersten Oberfläche 104 oder der zweiten Oberfläche 6 nahen Bereich durch die zähflüssige, viskose oder pastöse Masse, in welche das Additiv, welches die Poren des Dosierelements durchströmt, eingebracht werden soll, kontaminiert. In der Folge verstopfen Poren oder Hohlräume nahe der ersten Oberfläche 104 oder der zweiten Oberfläche 6. Der durch die Verstopfung erfolgende Verschluss der Poren ist entweder bei haftfähiger, zähflüssiger, viskoser oder pastöser Masse irreversibel oder teilweise reversibel, was aber zur Folge hat, dass sich periodisch Klumpen der Masse wieder aus den Hohlräumen oder Poren lösen und in den Hauptstrom der zähflüssigen, viskosen oder pastösen Masse wieder eingetragen werden. Dieser Eintrag kann unkritisch sein, wenn sich die Eigenschaften der zähflüssigen, viskosen oder pastösen Masse durch die verlängerte Verweilzeit nicht oder nicht wesentlich ändern, wird aber bei Massen, die eine stark verweilzeitabhängige Zusammensetzung, oder sogar verweilzeitabhängig chemischen Reaktionen unterliegen, zu beträchtlichen Qualitätseinbussen des additivversetzten Produkts führen, die unter Umständen eine Weiterverarbeitung der additivversetzten zähflüssigen, viskosen oder pastösen Masse nicht erlauben.

Daher sollte der Eintrag von zähflüssiger, viskoser oder pastöser Masse in die Innenräume der Hohlräume oder Poren nach Möglichkeit gänzlich vermieden werden.

Hierzu wird nach der in Fig. 5 dargestellten Variante der mittlere Porendurchmesser in einem Randbereich nahe der ersten Oberfläche 104 oder der zweiten Oberfläche 6 gegenüber dem Kernbereich des Dosierelements verringert. Hierdurch wird im Randbereich des Dosierelements die Strömungsgeschwindigkeit des leichtflüchtigen oder gasförmigen Additivs gegenüber der Strömungsgeschwindigkeit durch die Poren oder Hohlräume vergrösserten Durchmessers erhöht, sodass eine Rückströmung von zähflüssiger, viskoser oder pastöser Masse in den Innenraum des Hohlraums vermieden wird.

Der Porendurchmesser im oberflächennahen Bereich des Dosierelements beträgt maximal 10 µm, bevorzugt 2-3 µm, insbesondere 0.5 µm. Ein Mittel zur Verringerung des Porendurchmessers ist eine Beschichtung (11,111).

Die Beschichtung umfasst zumindest eine Schicht, kann aber auch aus mehreren Lagen gleicher oder unterschiedlicher Zusammensetzung bestehen.

Ein weiteres Ausführungsbeispiel für die Beschichtung ist in Fig. 6 dargestellt. Fig. 6 zeigt einen Ausschnitt der ersten Oberfläche 104 oder der zweiten Oberfläche 6 eines porösen Dosierelements, welche aus zumindest zwei Schichten aufgebaut ist, nämlich dem Körper (12, 112) und der Beschichtung (11,111). Die Beschichtung überzieht die Poren des Körpers (12,112) und besteht selbst aus einem porösen Material, welches kleinere Poren als der Körper (12,112) hat. Einige Poren 18 werden in der Fig. 6 gezeigt, welche die Poren des Körpers somit überdecken und bis auf einen durchströmten Querschnitt 19 der Poren 18 verschliessen. Der durchströmte Querschnitt 19 kann somit beliebig gewählt werden, sodass er an die Anforderungen des jeweiligen Additivs angepasst ist.

Grundsätzlich kann anstatt einer Beschichtung auch eine poröse Hülse vorgesehen sein, welche über das Dosierelement gestülpt wird. Die Verwendung einer Hülse erleichtert insbesondere die Handhabung bei Kontamination, welche die Hülse mit dem durchströmten Querschnitt 19 betrifft. In diesem Fall genügt es, die Hülse auszutauschen. Diese Anordnung hat den weiteren Vorteil, dass der Austausch der Hülse wenig Zeit in Anspruch nimmt und die Vorrichtung zur Einleitung eines Additivs in eine Polymerschmelze nach einer kurzen Unterbrechung wieder in Betrieb genommen werden kann. Die Hülse kann in einem separaten Reinigungsschritt von Verschmutzungen befreit werden.

Zur Vermeidung von Verschmutzungen durch sich im Inneren der Poren ablagernde fluide, viskose, zähflüssige oder pastöse Masse kann die Beschichtung (11, 111) auch eine Schicht aus schmutzabweisendem Material umfassen, insbesondere eine Schicht aus selbstreinigendem, nanokristallinen Gefüge.

## Patentansprüche

1. Dosiervorrichtung (1,101), umfassend ein Dosierelement (2,102) aus einem fluid- oder gasdurchlässigen Material, und ein Grundmaterial (3,103), wobei das Dosierelement (2, 102) eine erste Oberfläche (4,106) aufweist, die an einen Zuleitungskanal (5,107) für ein gasförmiges oder dünnflüssiges Medium angrenzt und eine zweite Oberfläche (6,104) aufweist, die an einen von einer zähflüssigen oder pastösen Masse durchströmten Kanalabschnitt (7,105) angrenzt sowie eine Mantelfläche (8,108) umfasst, welche zumindest teilweise eine form- oder kraftschlüssige Verbindung mit einer dosierelementaufnehmenden Ausnehmung (9,109) im Grundmaterial (3,103) eingeht, wodurch das Dosierelement (2,102) im Grundmaterial (3,103) befestigbar ist und ein fluidleitendes Element (13,113) ausbildet, wobei das Dosierelement Poren ausbildende Hohlräume (10,110) aufweist, welche von der ersten Oberfläche (4,106) zu der zweiten Oberfläche (6,104) von einem gasförmigen oder dünnflüssigen Medium durchströmbar sind, **dadurch gekennzeichnet, dass** die zweite Oberfläche (6,104) ein Mittel (11,111) zur Verringerung des durchströmten Querschnitts umfasst, sodass ein Eintritt von zähflüssiger oder pastöser Masse in das Innere des Dosierelements (2,102) vermeidbar ist.

2. Dosiervorrichtung nach Anspruch 1, wobei der Porendurchmesser an der zweiten Oberfläche (6,104) maximal 10 µm, bevorzugt 2-3 µm, insbesondere 0.5 µm beträgt.

3. Dosiervorrichtung nach einem der vorhergehenden Ansprüche, wobei das Grundmaterial (3) ein Stahl ist.

4. Dosiervorrichtung nach einem der vorhergehenden Ansprüche, wobei das fluid- oder gasdurchlässige Material ein keramisches Material oder ein Metall umfasst, das gegebenenfalls als eine Legierung ausgebildet ist.

5. Dosiervorrichtung nach einem der vorhergehenden Ansprüche, wobei das Mittel eine Beschichtung (11,111) umfasst.

6. Dosiervorrichtung nach Anspruch 5, wobei die Beschichtung (11,111) ein metallisches und/oder keramisches Beschichtungsmaterial umfasst.

7. Dosiervorrichtung nach einem der Ansprüche 5 oder 6, wobei die Beschichtung (11,111) mittels eines PVD Verfahrens auf das fluid- oder gasdurchlässige Material aufbringbar ist.

8. Dosiervorrichtung nach einem der vorhergehenden Ansprüche 5-7, wobei die Beschichtung (11,111) mehrere Lagen umfasst.

9. Dosiervorrichtung nach Anspruch 8, wobei zumindest eine Lage sich in ihrer Zusammensetzung von den anderen Lagen unterscheidet.

10. Dosiervorrichtung nach einem der vorhergehenden Ansprüche, wobei durch das Mittel (11,111) der durchströmte Querschnitt um mindestens 10% vorzugsweise um mindestens 18% insbesondere um mindestens 36% verringerbar ist.

11. Verwendung einer Dosiervorrichtung nach einem der vorhergehenden Ansprüche zum Eintrag eines Additivs in eine Schmelze, insbesondere eines Treibmittels in eine Polymerschmelze.

## Claims

1. A metering device (1, 101) including a metering element (2, 102), which is made of a fluid-permeable or gas-permeable material, and a base material (3, 103), with the metering element (2, 102) having a first surface (4, 106), which borders on an infeed passage (5, 107) for a gaseous or fluid medium, and a second surface (6, 104), which borders on a passage section (7, 105) through which is a viscous or pasty mass, flows as well as a jacket surface (8, 108) which enters at least partly into a shape matched or force transmitting connection with a metering element receiving recess (9, 109) in the base material (3, 103), whereby the metering element (2, 102) can be secured in the base material (3, 103) and forms a fluid-conducting element (13, 113), with the metering element having hollow spaces (10, 110) which form pores and through which a gaseous or fluid medium can flow from the first surface (4, 106) to the second surface (6, 104), **characterised in that** the second surface (6, 104) includes a means (11, 111) to reduce the cross-section through which flow takes place so that an entry of viscous or pasty mass into the interior of the metering element (2, 102) can be avoided.

2. A metering device in accordance with claim 1, wherein the pore diameter at the second surface (6, 104) amounts to a maximum of 10 µm, preferably 2-3µm, in particular 0.5 µm.

3. A metering device in accordance with any one of the preceding claims, wherein the base material (3) is a steel.

4. A metering device in accordance with any one of the preceding claims, wherein the fluid-permeable or gas-permeable material includes a ceramic material or a metal which is optionally formed as an alloy.

5. A metering device in accordance with any one of the preceding claims, wherein the means includes a coating (11, 111).

6. A metering device in accordance with claim 5, wherein the coating (11, 111) includes a metal and/or a ceramic coating material.

7. A metering device in accordance with one of the claims 5 or 6, wherein the coating (11, 111) can be applied to the fluid-permeable or gas-permeable material by means of a PVD process.

8. A metering device in accordance with any one of the preceding claims 5-7, wherein the coating (11, 111) includes a plurality of layers.

9. A metering device in accordance with claim 8, wherein at least one layer differs in its composition from the other layers.

10. A metering device in accordance with any one of the preceding claims, wherein the cross-section through which flow takes place can be reduced by the means (11, 111) by at least 10%, preferably by at least 18%, in particular by at least 36%.

11. Use of a metering device in accordance with any one of the preceding claims for the introduction of an additive into a melt, in particular of a foaming agent into a polymer melt.

## Revendications

1. Dispositif de dosage (1, 101) comprenant un élément de dosage (2, 102) en un matériau perméable au fluide ou au gaz, et un matériau de base (3, 103), où l'élément de dosage (2, 102) présente une première surface (4, 106) qui avoisine un canal d'amenée (5, 107) d'un milieu gazeux ou fluide et présente une deuxième surface (6, 104) qui avoisine une section de canal (7, 105) traversée par une masse visqueuse ou pâteuse et comprend une face d'enveloppe (8, 108) qui entre au moins partiellement en liaison par forme ou par force avec un évidement (9, 109) recevant l'élément de dosage dans le matériau de base (3, 103), par quoi l'élément de dosage (2, 102) peut être fixé dans le matériau de base (3, 103) et forme un élément conducteur de fluide (13, 113), où l'élément de dosage présente des espaces creux (10, 110) formant des pores, qui peuvent être traversés de la première surface (406) à la deuxième surface (604) par un milieu gazeux ou fluide, **caractérisé en ce que** la deuxième surface (604) comprend un moyen (11, 111) pour réduire la section transversale traversée de sorte qu'une entrée de masse visqueuse ou pâteuse dans l'intérieur de l'élément de dosage (2, 102) peut être évitée.

2. Dispositif de dosage selon la revendication 1, dans lequel le diamètre des pores à la deuxième surface (104) est au maximum de 10 µm, de préférence de 2-3 µm, en particulier de 0,5 µm.

3. Dispositif de dosage selon l'une des revendications précédentes, où le matériau de base (3) est un acier.

4. Dispositif de dosage selon l'une des revendications précédentes, dans lequel le matériau perméable au fluide ou au gaz comprend un matériau céramique ou un métal qui est réalisé le cas échéant comme un alliage.

5. Dispositif de dosage selon l'une des revendications précédentes, où le moyen comprend un revêtement (11, 111).

6. Dispositif de dosage selon la revendication 5, où le revêtement (11, 111) comprend un matériau de revêtement métallique et/ou céramique.

7. Dispositif de dosage selon l'une des revendications 5 ou 6, où le revêtement (11, 111) peut être appliqué au moyen d'un procédé PVD sur le matériau perméable au fluide ou au gaz.

8. Dispositif de dosage selon l'une des revendications précédentes 5 à 7, où le revêtement (11, 111) comprend plusieurs couches.

9. Dispositif de dosage selon la revendication 8, où au moins une couche se différencie, par sa composition, des autres couches.

10. Dispositif de dosage selon l'une des revendications précédentes, dans lequel, par le moyen (11, 111), la section transversale traversée peut être réduite d'au moins 10%, de préférence d'au moins 18%, en particulier d'au moins 36%.

11. Utilisation d'un dispositif de dosage selon l'une des revendications précédentes pour l'introduction d'un additif dans une fusion, en particulier d'un agent gonflant dans une fusion de polymère.
